# EUROPEAN PATENT APPLICATION

(11) **EP 1 985 658 A1**
(43) Date of publication of application: **29.10.2008**
(21) Application number: 07714352.7
(22) Date of filing: 16.02.2007
(51) Int. Cl.: C08L 15/00

(54) **HYDROGENATED NBR COMPOSITIONS**

(30) Priority: 17.02.2006 JP 2006040275
(71) Applicant: NOK Corporation, Minato-ku Tokyo 105-8585 (JP)
(72) Inventor: MORITANI, Yoichi, Fujisawa-shi, Kanagawa 251-0042 (JP)
(74) Representative: HOFFMANN EITLE
(86) International application number: PCT/JP2007/052822
(87) International publication number: WO 2007/094447

(57) **Abstract**

A hydrogenated NBR composition, which comprises a 100 parts by weight of hydrogenated NBR having an acrylonitrile content of 25-45% by weight and an iodine number of 20-65, or a blend of the hydrogenated NBRs themselves, 10-70 parts by weight of furnace black having a nitrogen adsorbable specific surface area of 30-130 (× 10³m²/kg), 10-80 parts by weight of thermal black having a nitrogen adsorbable specific surface area of 5-15 (× 10³m²/kg), 2-23 parts by weight of an ester-based plasticizer, and 0.5-10 parts by weight of an organic peroxide, and preferably further contains 0.5-10 parts by weight of a polyfunctional unsaturated compound, can give molding products having distinguished oil resistance and fuel oil resistance as well as distinguished heat resistance and cold resistance, even if a hydrogenated NBR having an iodine number of 20 to less than 32, and thus can be used as suitable molding materials for intake manifold gaskets of automobile engines.

## Description

### TECHNICAL FIELD

The present invention relates to a hydrogenated NBR composition, and more particularly to a hydrogenated NBR composition for use as suitable molding materials for automobile engine parts such as intake manifold gaskets, etc.

### BACKGROUND ART

Only hydrogenated NBR having an iodine number of 28 or less has been so far used for fear of heat resistance problem, etc., where the heat resistance can be indeed improved, but it cannot be disregard that there is still a possibility to deteriorate the low temperature characteristics (as evaluated in terms of compression set value at low temperatures such as -30°C). As a result, the molded products will suffer from occurrence of permanent set, when exposed to low-temperature using circumstances and oil leakage therefrom will take place, especially in the case of a sealing materials, leading to undesirable failure in product performance.
Patent Literature 1 : JP-A-2001-288303

The present applicant has so far proposed a hydrogenated NBR composition capable of giving molding products, which satisfy both heat resistance and cold resistance at the same time, which comprises a hydrogenated NBR having an acrylonitrile content of 15-30% by weight, white carbon having a specific surface area of 200m²/g or less, and an organic peroxide, and preferably further contains a polyfunctional unsaturated compound and/or carbon black. The proposed hydrogenated NBR composition could attain the expected results, but encountered such a new problem as swelling of the polymer due to the low acrylonitrile content in such use circumstances that the gaskets around engines were exposed to oils and fuel oils, resulting in use failure.
Patent Literature 2 : JP-A-2000-212333

### DISCLOSURE OF THE INVENTION

### PROBLEM TO BE SOLVED BY THE INVENTION

An object of the present invention is to provide a hydrogenated NBR composition capable of giving molding products having distinguished oil resistance and fuel oil resistance as well as distinguished heat resistance and cold resistance, even if a hydrogenated NBR having an iodine number of less than 32 is used, and capable of serving as suitable molding materials for intake manifold gaskets of automobile engines.

### MEANS FOR SOLVING THE PROBLEM

The objects of the present invention can be attained by a hydrogenated NBR composition, which comprises 100 parts by weight of a hydrogenated NBR having an acrylonitrile content of 25-45% by weight and an iodine number of 20-65, or a blend of the hydrogenated NBRs themselves, 10-70 parts by weight of furnace black having a nitrogen adsorbable specific surface area of 30-130 (× 10³m²/kg), 10-80 parts by weight of thermal black having a nitrogen adsorbable specific surface area of 5-15 (× 10³m²/kg), 2-23 parts by weight of an ester-based plasticizer, and 0.5-10 parts by weight of an organic peroxide, and preferably further contains 0.5-10 parts by weight of a polyfunctional unsaturated compound.

### EFFECTS OF THE INVENTION

The present hydrogenated NBR composition can give cross-linked products having not only both distinguished heat resistance and cold resistance as determined by the compression set, while maintaining an elasticity at low temperatures, but also a distinguished oil resistance (resistance to such oil as No. 3 oil and other general-purpose engine oil, etc.) and a distinguished fuel oil resistance (resistance to such fuel oil as fuel oil C, and other general-purpose gasoline, etc.) by using two kinds of carbon black at the same time, even if a hydrogenated NBR having an iodine number of less than 32 is used, and thus can serve as suitable molding materials for intake manifold gaskets of automobile engines and sealing parts, etc. of automobiles, particularly around engines or transmission systems.

### BEST MODES FOR CARRYING OUT THE INVENTION

Hydrogenated NBR for use in the present invention has an acrylonitrile (AN) content of 25-45% by weight, preferably 30-40% by weight, and an iodine number of 20-65, preferably 32-60, where those having an iodine number of 20 to less than 32 can be used by using two kinds of carbon black at the same time. When the AN content is less than 25% by weight, the oil resistance and the fuel oil resistance will be deteriorated, and oil leakage from the cross-linked products will occur at elevated temperatures, whereas when the AN content is more than 45% by weight, low-temperature characteristics will be deteriorated, and oil leakage will occur at low temperatures. When the iodine number is less than 20, the low-temperature characteristics will be likewise deteriorated, and oil leakage will occur at low temperatures, whereas the iodine number is more than 65, the heat resistance will be deteriorated. Actually, commercially available products, for example, Zetpole series products of Nippon Zeon Co., Ltd., each having a hydrogenation rate of about 90%, such as 1020 (AN content : 44wt.% ; iodine number : 25), 2020 (AN content: 36wt.% ; iodine number : 28) 2020L (AN content: 36wt.% ; iodine number : 28), 3120 (AN content: 25wt.% ; iodine number : 31), etc. can be used alone or as blend thereof. In case of a blend of the hydrogenated NBRs themselves, even a hydrogenated NBR having an AN content and an iodine number, which are outside the prescribed ranges can be used, so long as the AN content and iodine number of the blend can be retained within the preserved ranges. Hydrogenated NBR or a blend of the hydrogenated NBRs, which has a Mooney viscosity ML₁₊₄ (100°C) of 40-150, preferably 70-120, can be used from the viewpoint of good balance between the mechanical strength and the kneadability.

In the present invention, about 10 to about 70 parts by weight, preferably about 20 to about 60 parts by weight, of furnace black having a nitrogen adsorbable specific surface area of 30-130 (× 10³m²/kg), preferably 35-90 (× 10³m²/kg), such as HAF, FEF, SAF, and SRF carbon blacks, preferably HAF or FEF carbon black, and about 10 to about 80 parts by weight, preferably 20-80 parts by weight, of thermal black having a nitrogen adsorbable specific surface area of 5-15 (× 10³m²/kg), such as MT carbon black, can be used at the same time on the basis of 100 parts by weight of hydrogenated NBR or a blend thereof, where the sum total of the two kinds of carbon black must be about 30 to about 150 parts by weight, preferably 40-120 parts by weight.

When the furnace black having a high reinforcing effect is used in a proportion of less than about 10 parts by weight, the rubber strength and elongation will be smaller, and the heat resistance will be deteriorated. When the thermal black is used in a proportion of less than about 10 parts by weight, the compression set characteristics will be deteriorated at low temperatures and oil leakage will occur at low temperatures. On the other hand, when the two kinds of carbon black is used in a proportion of more than about 150 parts by weight in sum total, the rubber kneadability and processability will be lowered.

Ester-based plasticizer for use in the present invention in cludes, for example, dibasic carboxylic acid esters such as dibutyl phthalate, di(2-ethylhexyl) phthalate, dioctyl phthalate, di(2-ethylhexyl) adipate, di-(butoxyethoxyethyl) adipate, di(2-ethylhexyl) azelate, dibutyl sebacate, di(2-ethylhexyl) sebacate, etc.; phosphoric acid esters such as tri(2-ethylhexyl) phosphate, triphenyl phosphate, cresyldiphenyl phosphate, tricresyl phosphate, etc.; and products of ADEKA-ARGUS Co., Ltd., such as RS107, RS700, RS705, P200, etc.

The ester-based plasticizer can be used in a proportion of 2-23 parts by weight, preferably 7-17 parts by weight, on the basis of 100 parts by weight of the hydrogenated NBR or a blend thereof. In case of a proportion of less than 2 parts by weight, the oil resistance and the fuel oil resistance will be deteriorated, leading to oil leakage from the cross-linked products, whereas in a proportion of more than 23 parts by weight the heat resistance will be deteriorated, though the low-temperature characteristics, oil resistance, etc. can be improved.

Hydrogenated NBR mixed with the two kinds of carbon black and the ester-based plasticizer can be cross-linked by an organic peroxide.

Organic peroxide for use in the present invention includes, for example, t-butyl peroxide, dicumyl peroxide, t-butyl cumyl peroxide, 1,1-di(t-butylperoxy)-3,3,5-trimethylcyclohexane, 2,5-dimethyl-2,5-di(t-butylperoxy) hexane, 2,5-dimethyl-2,5-di(t-butylperoxy) hexine-3, 1,3-di(t-butylperoxyisopropyl) benzene, 2,5-dimethyl-2,5-di(benzoylperoxy) hexane, t-butylperoxy benzoate, t-butylperoxyisopropyl carbonate, n-butyl-4,4' - di(t-butylperoxy) valerate, etc., and can be used in a proportion of about 1 to about 10 parts by weight, preferably about 2 to about 8 parts by weight, on the basis of 100 parts by weight of hydrogenated NBR or a blend thereof. In case of a proportion of organic peroxide of less than about 1 part by weight, the resulting vulcanization products fail to have a satisfactory cross-linking density, whereas in a proportion of more than about 10 parts by weight foaming will occur, resulting in vulcanization molding failure, or even if the vulcanization molding is possible, the rubber elasticity or elongation will be lowered.

Besides the afore-mentioned essential components, the present composition can preferably further contain a polyfunctional unsaturated compound such as triallyl (iso)cyanurate, trimethylolpropane tri(meth)acrylate, triallyl trimellitate, etc. in a proportion of about 0.5 to about 10 parts by weight, preferably about 2 to about 8 parts by weight, on the basis of 100 parts by weight of hydrogenated NBR or a blend thereof. Addition of the polyfunctional unsaturated compound is effective for further improvement of heat resistance and compression set characteristics. In case of a proportion of more than about 10 parts by weight the rubber elasticity and elongation will be lowered.

The present composition can be prepared by adding appropriate additives generally used in the rubber industry, if required, to the afore-mentioned components, for example, a processing aid such as stearic acid, palmitic acid, paraffin wax, etc., an acid acceptor such as zinc oxide, magnesium oxide, hydrotalcite, etc. or open rolls, an antioxidant, etc. and then kneading the resulting mixture through a kneading machine such as Intermix, a kneader, a Banbury mixer, etc. or open rolls, and its vulcanization can be carried out by heating generally at about 150° to about 200°C for about 3 to about 60 minutes through an injection molding machine, a compression molding machine, a vulcanization press, etc. and, if necessary, secondary vulcanization can be carried out by heating at about 120° to about 200°C for about 1 to about 24 hours.

### EXAMPLES

The present invention will be described in detail below, referring to Examples.

### EXAMPLE 1

| | Parts by weight |
|---|---|
| Hydrogenated NBR (Zetpole 2020, a product of Nippon Zeon Co., Ltd., AN content: 36 wt.%, iodine number : 28, and Mooney viscosity ML₁₊₄ (100°C) : 78) | 100 |
| FEF carbon black [FEB CB] | 40 |
| MT carbon black [MT CB] | 35 |
| Ester-based plasticizer (RS107, a product of ADEKA-ARGUS Co., Ltd., adipic acid ether ester) | 15 |
| Antioxidant (Anti CD, a product of Ouchi-Shinko Chemical Co., Ltd.) | 1.5 |
| Antioxidant (Anti MBZ, a product of Ouchi-Shinko Chemical Co., Ltd.) | 1.5 |
| Zinc white | 2 |
| Organic peroxide (Percumyl D, a product of NOF Corp.) | 6 |

The above-mentioned components were kneaded through a kneader and open rolls, and the resulting kneaded product was subjected to press vulcanization at 170°C for 20 minutes and then to oven vulcanization (secondary vulcanization) at 160°C for 3 hours. The resulting vulcanized sheets (150mm × 150mm × 2mm) and P24 O-rings were subjected to determination of the following test items :
Normal state physical properties : according to JIS K6253 and JIS K6 251
Compression set: according to JIS K6262
   At high temperature (150°C for 70 hours)
   At low temperature (-30°C for 22 hours ; values at 30 minutes after release)
Low-temperature characteristics : according to ASTM D-1329 (TR-10 value)
Heat resistance : Change (rate) of normal state physical properties and volume after standing in an oven at 150°C for 70 hours
Oil resistance : Change (rate) of normal state physical properties and volume after dipping in No. 3 oil at 120°C for 70 hours
Fuel oil resistance : Change (rate) of normal state physical properties and volume after dipping in fuel oil C at 60°C for 70 hours
Product performance evaluation : Visual observation of presence of oil leakage at low temperature (-30°C) and high temperature (120°C)

### EXAMPLE 2

In Example 1, the amount of FEF CB was changed to 25 parts by weight, and that of MT CB to 70 parts by weight.

### EXAMPLE 3

In Example 1, the amount of FEF CB was changed to 32 parts by weight, that of MT CB to 35 parts by weight, and that of the ester-based plasitcizer to 8 parts by weight.

### EXAMPLE 4

In Example 1, the amount of FEF CB was changed to 57 parts by weight, that of MT CB to 35 parts by weight, and that of the ester-based plasitcizer to 25 parts by weight.

### COMPARATIVE EXAMPLE 1

In Example 1, the amount of FEF CB was changed to 60 parts by weight, and the MT CB was not used.

### COMPARATIVE EXAMPLE 2

In Example 1, the amount of MT CB was changed to 120 parts by weight, and the FEF CB was not used.

### COMPARATIVE EXAMPLE 3

In Example 1, the amount of FEF CB was changed to 24 parts by weight, and the ester-based plasticizer was not used.

### COMPARATIVE EXAMPLE 4

In Example 1, the amount of FEF CB was changed to 70 parts by weight, and that of the ester-based plasticizer to 40 parts by weight.

### COMPARATIVE EXAMPLE 5

In Example 1, the same amount of Zetpole 2010, a product of Nippon Zeon Co., Ltd. (AN content: 36wt.%, iodine number : 11, and Mooney viscos ity ML₁₊₄ (100°C) : 85) was used as hydrogenated NBR, and the amount of FEF carbon black was changed to 32 parts by weight.

Results of determination in the foregoing Examples and Comparative Examples are shown in the following Table.

**Table**

| | | Example | | | | Comp. Example | | | | |
|---|---|---|---|---|---|---|---|---|---|---|
| Determination Item | | 1 | 2 | 3 | 4 | 1 | 2 | 3 | 4 | 5 |
| [Normal state physical properties] | | | | | | | | | | |
| Hardness | (Duro A) | 73 | 73 | 73 | 73 | 74 | 73 | 73 | 73 | 70 |
| Tensile strength | (MPa) | 23.4 | 19.1 | 24.5 | 21.2 | 25.5 | 15.1 | 26.2 | 16.5 | 22.7 |
| Elongation | (%) | 220 | 180 | 220 | 200 | 200 | 150 | 240 | 160 | 350 |

| [Compression set] | | | | | | | | | | |
|---|---|---|---|---|---|---|---|---|---|---|
| At high temp. | (%) | 13 | 15 | 11 | 17 | 11 | 19 | 6 | 22 | 10 |
| At low temp. | (%) | 48 | 51 | 48 | 51 | 68 | 55 | 65 | 57 | 66 |

| [Low-temp. characteristics] | | | | | | | | | | |
|---|---|---|---|---|---|---|---|---|---|---|
| TR-10 | (°C) | -34 | -34 | -29 | -39 | -33 | -34 | -26 | -42 | -29 |

| [Heat resistance] | | | | | | | | | | |
|---|---|---|---|---|---|---|---|---|---|---|
| Hardness change | (point) | +6 | +6 | +3 | +7 | +6 | +6 | ±0 | +12 | +5 |

| Tensile strength | | | | | | | | | | |
|---|---|---|---|---|---|---|---|---|---|---|
| change rate | (%) | +5 | +6 | +4 | +7 | +5 | +7 | +2 | +20 | +4 |

| Elongation change | | | | | | | | | | |
|---|---|---|---|---|---|---|---|---|---|---|
| rate | (%) | +1 | +2 | +1 | -1 | +1 | +2 | ±0 | -11 | -8 |

| [Oil resistance] | | | | | | | | | | |
|---|---|---|---|---|---|---|---|---|---|---|
| Hardness change | (point) | -3 | -3 | -6 | ±0 | -3 | -1 | -10 | +3 | -5 |

| Tensile strength | | | | | | | | | | |
|---|---|---|---|---|---|---|---|---|---|---|
| change rate | (%) | -3 | -3 | -12 | +5 | -5 | -2 | -20 | +10 | -3 |
| Elongation change | | | | | | | | | | |
| rate | (%) | -5 | -5 | -11 | -5 | -8 | -3 | -15 | -10 | -11 |

| Volume change rate | | | | | | | | | | |
|---|---|---|---|---|---|---|---|---|---|---|
| ΔV | (%) | +5.2 | +4.8 | +9.1 | -3.0 | +6.1 | +4.0 | +14 | -7.1 | +6.3 |

| [Fuel oil resistance] | | | | | | | | | | |
|---|---|---|---|---|---|---|---|---|---|---|
| Hardness change | (point) | -7 | -6 | -14 | -3 | -7 | -6 | -20 | +1 | -15 |

| Tensile strength | | | | | | | | | | |
|---|---|---|---|---|---|---|---|---|---|---|
| change rate | (%) | -52 | -50 | -47 | -51 | -55 | -45 | -51 | -52 | -47 |

| Elongation change | | | | | | | | | | |
|---|---|---|---|---|---|---|---|---|---|---|
| rate | (%) | -43 | -40 | -45 | -41 | -45 | -38 | -49 | -40 | -46 |

| Volume change rate | | | | | | | | | | |
|---|---|---|---|---|---|---|---|---|---|---|
| ΔV | (%) | +45 | +43 | +51 | +37 | +47 | +40 | +57 | +31 | +47 |

| [Product performance evaluation] | | | | | | | | | | |
|---|---|---|---|---|---|---|---|---|---|---|
| Oil leakage occurrence | | None | None | None | None | At low temp. | At high temp. | At low temp. | At high temp. | At low temp. |

## Claims

1. A hydrogenated NBR composition, which comprises 100 parts by weight of a hydrogenated NBR having an acrylonitrile content of 25-45% by weight, and an iodine number of 20-65, or a blend of the hydrogenated NBRs themselves, 10-70 parts by weight of furnace black having a nitrogen adsorbable specific surface area of 30-130 (× 10³m²/kg), 10-80 parts by weight of thermal black having a nitrogen adsorbable specific area of 5-15 (× 10³m²/kg), 2-23 parts by weight of an ester-based plasticizer, and 0.5-10 parts by weight of an organic peroxide.

2. A hydrogenated NBR composition according to Claim 1, wherein the hydrogenated NBR or a blend of the hydrogenated NBRs themselves has an iodine number of 20 to less than 32.

3. A hydrogenated NBR composition according to Claim 1, wherein the hydrogenated NBR or a blend of the hydrogenated NBRs themselves has a Mooney viscosity ML₁₊₄ (100°C) of 40-150.

4. A hydrogenated NBR composition according to Claim 1, wherein the furnace black and the thermal black are used in sum total of 30-150 parts by weight.

5. A hydrogenated NBR composition according to Claim 1, wherein 0.5-10 parts by weight of a polyfunctional unsaturated compound is further contained.

6. A hydrogenated NBR composition according to Claim 1, for use as molding materials for intake manifold gaskets of engines.

7. An intake manifold gasket obtained by cross-linking molding of a hydrogenated NBR composition according to Claim 6.

8. A hydrogenated NBR composition according to Claim 2, for use as molding materials for intake manifold gaskets of engines.

9. An intake manifold gasket obtained by cross-linking molding of a hydrogenated NBR composition according to Claim 8.

10. A hydrogenated NBR composition according to Claim 5, for use as molding materials for intake manifold gaskets of engines.

11. An intake manifold gasket obtained by cross-linking molding of a hydrogenated NBR composition according to Claim 10.

## Amended claims

### Amended claims under Art. 19.1 PCT

**1.** (Amended) A hydrogenated NBR composition, which comprises 100 parts by weight of a hydrogenated NBR having an acrylonitrile content of 25-45% by weight, and an iodine number of 20-65, or a blend of the hydrogenated NBRs themselves, 10-70 parts by weight of furnace black having a nitrogen adsorbable specific surface area of 30-130 (× 10³m²/kg), 10-80 parts by weight of thermal black having a nitrogen adsorbable specific area of 5-15 (× 10³m²/kg), 2-23 parts by weight of an ester-based plasticizer, and 0.5-10 parts by weight of an organic peroxide, for use as molding materials for intake manifold gaskets of engines.

**2.** A hydrogenated NBR composition according to Claim 1, wherein the hydrogenated NBR or a blend of the hydrogenated NBRs themselves has an iodine number of 20 to less than 32.

**3.** A hydrogenated NBR composition according to Claim 1, wherein the hydrogenated NBR or a blend of the hydrogenated NBRs themselves has a Mooney viscosity ML₁₊₄ (100°C) of 40-150.

**4.** A hydrogenated NBR composition according to Claim 1, wherein the furnace black and the thermal black are used in sum total of 30-150 parts by weight.

**5.** A hydrogenated NBR composition according to Claim 1, wherein 0.5-10 parts by weight of a polyfunctional unsaturated compound is further contained.

**6.** (Deleted)

**7.** (Amended) An intake manifold gasket obtained by cross-linking molding of a hydrogenated NBR composition according to Claim 1.

**8.** (Deleted)

**9.** (Amended) An intake manifold gasket obtained by cross-linking molding of a hydrogenated NBR composition according to Claim 2.

**10.** (Deleted)

**11.** (Amended) An intake manifold gasket obtained by cross-linking molding of a hydrogenated NBR composition according to Claim 3.
